# EUROPEAN PATENT SPECIFICATION

(11) **EP 2 626 591 B1**
(45) Date of publication and mention of the grant of the patent: **23.11.2016**
(21) Application number: 10858082.0
(22) Date of filing: 06.10.2010
(51) Int. Cl.: F16F 15/133, F16C 19/12, F16C 29/04, F16F 15/139, F16H 25/24, F16F 15/121, F16F 15/16, F16H 25/22

(54) **TORSIONAL VIBRATION ATTENUATION APPARATUS**
VORRICHTUNG ZUR ABSCWÄCHUNG VON TORSIONSSCHWINGUNGEN
DISPOSITIF D'ATTENUATION DE VIBRATIONS DE TORSION

(43) Date of publication of application: 14.08.2013
(73) Proprietor: TOYOTA JIDOSHA KABUSHIKI KAISHA, Toyota-shi, Aichi-ken, 471-8571 (JP)
(72) Inventor: WATARAI, Shinichiro, Toyota-shi, Aichi-ken, 471-8571 (JP)
(74) Representative: Kuhnen & Wacker
(86) International application number: PCT/JP2010/005984
(87) International publication number: WO 2012/046273

(56) References cited:
- GB-A- 2 103 336
- JP-A- 9 032 883
- JP-A- 62 098 030
- JP-A- 2004 257 536

## Description

### {Technical Field}

The present invention relates to a torsional vibration attenuation apparatus, and more particularly to a torsional vibration attenuation apparatus which includes an outer peripheral cylindrical member and an inner peripheral cylindrical member to attenuate torsional vibrations between the outer peripheral cylindrical member and the inner peripheral cylindrical member and to transmit a torque between the outer peripheral cylindrical member and the inner peripheral cylindrical member.

### {Background Art}

As a torsional vibration attenuation apparatus of this type, there has so far been known a torsional vibration attenuation apparatus which includes a drive source such as an internal combustion engine, an electric motor and the like, and driven wheels drivably connected with the drive source to be driven by the rotational torque transmitted from the drive source. The conventional torsional vibration attenuation apparatus is adapted to absorb the torsional vibrations between the drive source and a drive system having transmission gear sets.

The known torsional vibration attenuation apparatus is constituted for example by a drive side rotation member adapted to be selectively coupled with or released from a drive source side flywheel, a driven rotational member connected with an input shaft forming part of a transmission, and a resilient member having the drive side rotation member and the driven side rotation member circumferentially resiliently connected with each other (see for exampleJP 2003-194095 A).

The drive side rotation member is constituted by a clutch disc, and a pair of disc plates provided radially inwardly of the clutch disc, while the driven side rotation member is partly constituted by a hub disposed between the disc plates to be connected with the input shaft of the transmission to be axially movable but not rotatable with respect to the input shaft of the transmission.

The hub has a cylindrical boss splined to the input shaft and a disc-like flange radially outwardly extending. The resilient member is merely constituted by a coil spring accommodated in a window hole formed in the flange and having circumferential both end portions supported on the circumferential both ends of the window hole and the circumferential both ends of additional window holes respectively formed in the pair of disc plates.

The known torsional vibration attenuation apparatus previously mentioned is constructed to have the coil spring circumferentially compressed between the clutch disc and the pair of disc plates and the hub when the clutch disc and the pair of disc plates and the hub are relatively rotated with one another, thereby making it possible to absorb and attenuate the torsional vibrations inputted to the driven side rotation member from the drive side rotation member.

On the other hand, it is well known in the art that there are generated abnormal noises at the idling time of a vehicle, and abnormal noises and muffled noises at the travelling time of the vehicle as transmission side noises generated by the torsional vibrations. It is therefore required to suitably set the torsional property of the torsional vibration attenuation apparatus in order to absorb the torsional vibrations leading to the generation of the above abnormal noises.

Here, the abnormal noises generated at the idling time of the vehicle are known to be constituted by what is called clattering noises, one kind of abnormal noises emitted as being "clattering" caused by the collisions of the gear pairs with no load. Those noises are generally caused by torsional vibrations originated from the rotational fluctuation caused by the torque fluctuation of the driving source in a small torsion angle formed by the clutch disc and the hub as at the idling time of the vehicle immediately after being speed changed to the neutral.

Further, the abnormal noises generated at the travelling time of the vehicle are known to be constituted partly by what is called chinking noises, one kind of abnormal noises emitted as being "chinking" from the collisions of the slipping gear pairs of the transmission gear sets caused by the torsional vibrations originated from the rotational fluctuation in response to the torque fluctuation of the driving source and caused by the torsional resonance of the driving system during the acceleration and deceleration of the vehicle.

In addition, the muffled noises are known as one kind of abnormal noises to be generated in the passenger room by the vibrations caused by the torsional resonance of the driving system originated from the torque fluctuation of the driving system. The torsional resonance of the driving system is usually caused at the normal travelling operation (for example around 2500 rpm of the rotational speed of the internal combustion engine), so that there is caused muffled noises in the passenger room at the normal travelling operation.

One of the conventional torsional vibration attenuation apparatuses having a torsional property suitably set is known for example from JP 2001-304341 A.

The known torsional vibration attenuation apparatus includes a cylindrical boss constituting a driven side rotation member, and a disc-like flange radially outwardly extending from the boss and divided into two parts. Between the outer peripheral portion of the boss and the inner peripheral portion of the flange is disposed a small coil spring having a small spring constant to absorb the torsional vibrations of the boss and the flange. A pair of disc plates are each formed with a first window portion and a second window portion which are spaced apart from each other in the circumferential direction of the disc plates.

The flange is formed with a first window hole and a second window hole respectively facing the first window portion and the second window portion of the disc plates. The first window portion and the first window hole accommodate therein a first coil spring and a first seat member. The first coil spring has a spring constant larger than the small spring. Further, the second window portion and the second window hole accommodate therein a second coil spring and a second seat member. The second coil spring has a spring constant larger than the small spring.

The first seat member has a gap circumferentially extending from the first window hole, and the first coil spring having such a characteristic that the first coil spring is not compressed in the small torsion angle area where the second coil spring is compressed but compressed in the large torsion angle where the second coil spring is compressed.

More specifically, in the area where the torsion angle of the clutch disc and the hub is small as in the state that the vehicle under the idling operation is changed to the neutral operation, the torque fluctuation absorbing apparatus is operative to have only the small coil spring compressed, thereby suppressing the "gara sound" by lowering the rigidity of the torsional characteristic in the small torsion angle area.

On the other hand, in the large torsion angle, only the second torsion spring is compressed to obtain the intermediate rigidity of the torsional characteristic with the torque being slowly raised, thereby making it possible to suppress the muffled sound.

When the torsion angle is further increased to the predetermined level, the first coil spring and the second coil spring are concurrently compressed to obtain the high rigidity of the torsional characteristic with the torque increase ratio being raised, thereby making it possible to suppress the "jara sound" sound. This means that multi-staged torsional characteristic can be obtained.

### {Prior Art Documents}

A torsional oscillation damper having first and second damping members mounted for rotation about a common rotational axis and a coupling member arranged in torque transmitting engagement therebetween is furthermore known from GB 2 103 336 A. The coupling member is in fixed rotative engagement with the first damper member and capable of being axially displaced relative to at least one of the damper members in the direction of the rotational axis. A spring device operates to apply a force to the coupling member against the axial direction of displacement thereof and the coupling member is movable over an axial slip surface between the coupling member and the second damper member acting during relative rotation between the coupling member and the second damper member.

### {Summary of Invention}

However, the conventional torque fluctuation absorbing apparatus disclosed in JP 2001-304341 A encounters such a problem that the "gara sounds" can be suppressed with the small coil spring being deformed, but it is difficult to structurally widen the axial length of the first and second coil springs, resulting from the fact that many first and second coil springs for absorbing the torque fluctuation are disposed radially outwardly of the cylindrical boss.

This leads to the fact that the conventional torque fluctuation absorbing apparatus is structurally difficult to enlarge the torsion angle between the drive side rotation member and driven side rotation member, thereby making it impossible to lower the rigidity of the torsional characteristic, and thereby making it difficult to sufficiently suppress the "jara sounds" the muffled sounds at the time of the travelling of the vehicle.

In the state that the first coil springs and the second coil springs are respectively accommodated in the window holes formed in the flange and in the window portions formed in the pair of disc plates, the first coil springs and the second coil springs are required to be applied with respective preliminary loads.

This leads to the fact that the first coil springs and the second coil springs are not compressed until the torques larger than the preliminary loads of the first coil springs and the second coil springs are generated, thereby resulting in the fact that the drive side rotation member and the driven side rotation member are not distorted to relatively large levels.

For this reason, the conventional torque fluctuation absorbing apparatus cannot obtain the high rigidity of the torsional characteristic until the first coil springs and the second coil springs are concurrently compressed, thereby making it impossible to suppress the "jara" sounds.

The present invention is made to overcome the previously mentioned problems encountered by the conventional torque fluctuation absorbing apparatus, and it is therefore an object of the present invention to provide a torsional vibration attenuation apparatus which can angularly widen the range of the torsion angle of the drive side rotation member to the driven side rotation member, thereby making it possible to lower the rigidity of the torsional characteristic of the outer peripheral cylindrical member and the inner peripheral cylindrical member.

### {Means for Solving Problems}

The above object is solved by a torsional vibration attenuation apparatus according to claim 1. The torsional vibration attenuation apparatus according to the present invention includes an outer peripheral cylindrical member supporting a first power transmission unit and having an inner peripheral portion formed with a first screw portion, an inner peripheral cylindrical member supporting a second power transmission unit and provided in the outer peripheral cylindrical member, an intermediate cylindrical member provided between the inner peripheral portion of the outer peripheral cylindrical member and the outer peripheral portion of the inner peripheral cylindrical member and having an outer peripheral portion formed with a second screw portion to be screwed with the first screw portion and an inner peripheral portion splined with the outer peripheral portion of the cylindrical inner peripheral portion, the intermediate cylindrical member being axially movable along the outer peripheral cylindrical member, a first resilient member intervening between the inner peripheral portion of the axial one end portion of the outer peripheral cylindrical member and the outer peripheral portion of the axial one end portion of the intermediate cylindrical member, a second resilient member intervening between the inner peripheral portion of the axial other end portion of the outer peripheral cylindrical member and the outer peripheral portion of the axial other end portion of the intermediate cylindrical member, and a plurality of ball members intervening between the first screw portion and the second screw portion. Both axial end portions of the inner peripheral cylindrical member are formed to have respective projecting portions projecting axially outwardly from the axially both end portions of the outer peripheral cylindrical member, and the torsional vibration attenuation apparatus further includes a hysteresis mechanism provided between the inner peripheral cylindrical member and the outer peripheral cylindrical member, the hysteresis mechanism including an urging member and a friction member, the urging member being provided between one of the projection portions of the inner peripheral cylindrical member and the outer peripheral portion of one of the axial ends of the outer peripheral cylindrical member to urge the outer peripheral cylindrical member toward the axial other ends of the inner peripheral cylindrical member, and the friction member being provided between the other of the projection portions of the inner peripheral cylindrical member and the outer peripheral portion of the other of the axial ends of the outer peripheral cylindrical member to generate friction force.

The above torsional vibration attenuation apparatus according to the present invention is constructed to have the inner peripheral portion of the outer peripheral cylindrical member and the outer peripheral portion of the inner peripheral cylindrical member connected with the first screw portion and the second screw portion and to have the inner peripheral portion of the intermediate cylindrical member splined with the outer peripheral portion of the cylindrical inner peripheral portion.

In addition of the previously mentioned construction, the above torsional vibration attenuation apparatus is constructed to have a first resilient member intervening between the inner peripheral portion of the axial one end portion of the outer peripheral cylindrical member and the outer peripheral portion of the axial one end portion of the intermediate cylindrical member, and a second resilient member intervening between the inner peripheral portion of the axial other end portion of the outer peripheral cylindrical member and the outer peripheral portion of the axial other end portion of the intermediate cylindrical member.

For this reason, the first resilient member or the second resilient member is resiliently deformed so that the reaction force acted on the intermediate cylindrical member from the resilient member such as the first resilient member or the second resilient member can be caused, thereby making it possible to generate the torsional characteristic between the outer peripheral cylindrical member and the inner peripheral cylindrical member.

For example, when the inner peripheral cylindrical member is distorted with respect to the outer peripheral cylindrical member is distorted in a positive side, the intermediate cylindrical member is moved in the axial direction of the outer peripheral cylindrical member through the first screw portion and the second screw portion to resiliently deform any one of the first resilient member and the second resilient member.

At this time, when the torsion angle of the outer peripheral cylindrical member and the inner peripheral cylindrical member is small, the first resilient member or the second resilient member to be deformed causes a reaction force, thereby making it possible to absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member by the first resilient member or the second resilient member.

When, on the other hand, the torsion angle of the outer peripheral cylindrical member and the inner peripheral cylindrical member is increased, the intermediate cylindrical member is further moved in the axial direction of the outer peripheral cylindrical member through the first screw portion and the second screw portion to resiliently deform any one of the first resilient member and the second resilient member.

At this time, the resilient deformation amount of any one of the first resilient member and the second resilient member is increased. The increased reaction force of the first resilient member or the second resilient member can absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member.

When, on the other hand, the inner peripheral cylindrical member is distorted with respect to the outer peripheral cylindrical member is distorted in a negative side, the intermediate cylindrical member is moved in the axial direction of the outer peripheral cylindrical member through the first screw portion and the second screw portion to resiliently deform the other of the first resilient member and the second resilient member.

At this time, when the torsion angle of the outer peripheral cylindrical member and the inner peripheral cylindrical member is small, the first resilient member or the second resilient member to be deformed causes a reaction force, thereby making it possible to absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member by the first resilient member or the second resilient member.

When, on the other hand, the torsion angle of the outer peripheral cylindrical member and the inner peripheral cylindrical member is increased, the intermediate cylindrical member is further moved in the axial direction of the outer peripheral cylindrical member through the first screw portion and the second screw portion to resiliently deform the other of the first resilient member and the second resilient member.

At this time, the resilient deformation amount of the other of the first resilient member and the second resilient member is increased. The increased reaction force of the first resilient member or the second resilient member can absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member.

As will be understood from the foregoing description, the intermediate cylindrical member can axially be moved in response to the torsion angle of the outer peripheral cylindrical member and the inner peripheral cylindrical member, thereby making it possible to cause the reaction forces of the first resilient member and the second resilient member and to generate the torsional characteristic between the outer peripheral cylindrical member and the inner peripheral cylindrical member. This makes it possible to transmit the power between the outer peripheral cylindrical member and the inner peripheral cylindrical member.

Further, the outer peripheral cylindrical member, the intermediate cylindrical member, and the inner peripheral cylindrical member are constructed to increase the axial movement of the intermediate cylindrical member as previously mentioned, thereby making it possible to angularly widen the range of the torsion angle and to lower the torsional rigidity of the outer peripheral cylindrical member and the inner peripheral cylindrical member.

As a consequence, the torsional vibration attenuation apparatus according to the present invention can attenuate large torsional vibrations originated from the rotational fluctuation caused by the torque fluctuation of the drive source and the torsional resonance of the driveline, and can suppress the "jara sound" generated by the idling gear couples of the transmission gear couples collided by the torsional vibrations and the muffled sounds generated by the torsional resonance of the driveline.

In the torsional vibration attenuation apparatus according to the present invention, the first resilient member intervening between the inner peripheral portion of the axial one end portion of the outer peripheral cylindrical member and the outer peripheral portion of the axial one end portion of the intermediate cylindrical member, and the second resilient member intervening between the inner peripheral portion of the axial other end portion of the outer peripheral cylindrical member and the outer peripheral portion of the axial other end portion of the intermediate cylindrical member are deformable, so that when the first resilient member and the second resilient member are compressed to generate reaction forces (urging force), respectively. The reaction forces can generate the torsional characteristics between the inner peripheral cylindrical member and the outer peripheral cylindrical member, thereby requiring no relatively large preliminary load to be imparted on the first resilient member and the second resilient member.

The above construction of the torsional vibration attenuation apparatus according to the present invention can cause the first resilient member and the second resilient member to be promptly compressed and thereby to promptly generate the torsional characteristic, thereby making it possible to additionally suppress the "jara" sounds and the muffled sounds.

In the torsional vibration attenuation apparatus according to the present invention, the first resilient member may preferably be resiliently deformable to urge the intermediate cylindrical member toward the axial other end of the cylindrical inner peripheral portion when the intermediate cylindrical member is moved toward the axial one end portion of the intermediate cylindrical member, and the second resilient member is resiliently deformable to urge the intermediate cylindrical member toward the axial one end of the cylindrical inner peripheral portion when the intermediate cylindrical member is moved toward the axial other end portion of the intermediate cylindrical member.

The fact that the torsional vibration attenuation apparatus according to the present invention is constructed to have the first resilient member resiliently deformable to urge the intermediate cylindrical member toward the axial other end of the cylindrical inner peripheral portion when the intermediate cylindrical member is moved toward the axial one end portion of the intermediate cylindrical member, results in the fact that the reaction force of the first resilient member can absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member for example when the intermediate cylindrical member is distorted with respect to the outer peripheral cylindrical member in a positive side.

The fact that the torsional vibration attenuation apparatus according to the present invention is constructed to have the second resilient member resiliently deformable to urge the intermediate cylindrical member toward the axial one end of the cylindrical inner peripheral portion when the intermediate cylindrical member is moved toward the axial other end portion of the intermediate cylindrical member, results in the fact that the reaction force of the second resilient member can absorb and attenuate the torsional vibrations of the outer peripheral cylindrical member and the inner peripheral cylindrical member while transmitting the power to the inner peripheral cylindrical member from the outer peripheral cylindrical member through the intermediate cylindrical member for example when the intermediate cylindrical member is distorted with respect to the outer peripheral cylindrical member in a negative side.

Therefore, the intermediate cylindrical member is axially moved in response to the torsion angle of the outer peripheral cylindrical member and the inner peripheral cylindrical member, thereby making it possible to reliably cause the reaction forces of the first resilient member and the second resilient member, and thereby to generate the torsional characteristic between the outer peripheral cylindrical member and the inner peripheral cylindrical member. This makes it possible to absorb and attenuate the torsional vibrations of the outer peripheral cylindrical member and the inner peripheral cylindrical member while transmitting the power between the outer peripheral cylindrical member and the inner peripheral cylindrical member.

The torsional vibration attenuation apparatus according to the present invention may preferably be constructed to further include a plurality of ball members intervening between the first screw portion and the second screw portion.

The fact that the torsional vibration attenuation apparatus according to the present invention is constructed to further include the plurality of ball members intervening between the first screw portion and the second screw portion, leads to the fact that the torsional vibration attenuation apparatus can reduce the frictional resistances of the contact surfaces of the first screw portion and the second screw portion, thereby making it possible to smoothly move the intermediate cylindrical member in the axial direction of the intermediate cylindrical member.

For this reason, the torsional vibration attenuation apparatus can smoothly move the intermediate cylindrical member in the axial direction of the intermediate cylindrical member to return the intermediate cylindrical member to its neutral position by the urging forces of the first resilient member and the second resilient member when the torsion angle of the outer peripheral cylindrical member and the inner peripheral cylindrical member is reduced to its small level.

In the torsional vibration attenuation apparatus according to the present invention, the first screw portion and the second screw portion may preferably have respective surfaces each coated with a low friction material.

The fact that the first screw portion and the second screw portion have respective surfaces each coated with a low friction material makes it possible to reduce the frictional resistances of the surfaces of the first screw portion and the second screw portion, and thereby to smoothly move the intermediate cylindrical member in the axial direction of the intermediate cylindrical member.

For this reason, the torsional vibration attenuation apparatus can smoothly move the intermediate cylindrical member in the axial direction of the intermediate cylindrical member to return the intermediate cylindrical member to its neutral position by the urging forces of the first resilient member and the second resilient member when the torsion angle of the outer peripheral cylindrical member and the inner peripheral cylindrical member is reduced to its small level.

In the torsional vibration attenuation apparatus according to the present invention, the first screw portion and the second screw portion may each preferably be formed with a square screw thread.

The fact that the first screw portion and the second screw portion are each formed with a square screw thread makes it possible to allow the first screw portion and the second screw portion to have whole contact surfaces held in contact with each other by way of surface contacts. For this reason, the surface contacts of the first screw portion and the second screw portion can prevent the torque transmission components from being generated on the tapered surfaces in the axial direction of the intermediate cylindrical member as seen in a triangle screw thread having tapered surfaces when the intermediate cylindrical member is axially moved with respect to the outer peripheral cylindrical member through the first screw portion and the second screw portion, so that the torsional vibration attenuation apparatus according to the present invention can have the torque transmission components to the first screw portion and the second screw portion only in the axial direction of the intermediate cylindrical member.

This means that the torsional vibration attenuation apparatus according to the present invention can suppress the power transmission loss between the outer peripheral cylindrical member and the inner peripheral cylindrical member by way of the first resilient member, the second resilient member, and the intermediate cylindrical member, thereby improving the power transmission property of the apparatus.

The torsional vibration attenuation apparatus according to the present invention may preferably be constructed to further include a pair of thrust bearings respectively provided between the intermediate cylindrical member and the first resilient member and between the intermediate cylindrical member and the second resilient member.

The fact that the torsional vibration attenuation apparatus according to the present invention is constructed to further include a pair of thrust bearings respectively provided between the intermediate cylindrical member and the first resilient member and between the intermediate cylindrical member and the second resilient member makes it possible to prevent the drag torques between the intermediate cylindrical member and the first resilient member and between the intermediate cylindrical member and the second resilient member when the intermediate cylindrical member is rotated. This means that the torsional vibration attenuation apparatus according to the present invention can smoothly rotate the intermediate cylindrical member with respect to the first resilient member and the second resilient member, thereby making it possible to improve the operation property of the torsional vibration attenuation apparatus.

In the torsional vibration attenuation apparatus according to the present invention, the inner peripheral portion of the intermediate cylindrical member and the outer peripheral portion of the inner peripheral cylindrical member may preferably be held in ball-spline engagement with each other.

The fact that the inner peripheral portion of the intermediate cylindrical member and the outer peripheral portion of the inner peripheral cylindrical member are held in ball-spline engagement with each other makes it possible to smoothly move the intermediate cylindrical member in the axial direction of the intermediate cylindrical member, thereby making it possible to improve the operation property of the torsional vibration attenuation apparatus.

The fact that the torsional vibration attenuation apparatus according to the present invention further includes a hysteresis mechanism provided between the projection portions of the inner peripheral cylindrical member and the outer peripheral portion of the outer peripheral cylindrical member makes it possible to generate hysteresis torques between the outer peripheral cylindrical member and the inner peripheral cylindrical member when the torsional resistance is generated in the driveline having a transmission at the acceleration and deceleration times of the vehicle. As a consequence, the torsional resonance of the driveline can even further be suppressed, thereby making it possible to even further suppress the muffled sounds from being generated.

The torsional vibration attenuation apparatus according to the present invention may preferably further include a first thrust plate and a second thrust plate, the first thrust plate intervening between the intermediate cylindrical member and the first resilient member to form a first accommodation chamber together with the outer peripheral portion of the axial one end portion of the intermediate cylindrical member, and the second thrust plate intervening between the intermediate cylindrical member and the second resilient member to form a second accommodation chamber together with the outer peripheral portion of the axial other end portion of the intermediate cylindrical member, the intermediate cylindrical member being formed with a through bore allowing the first accommodation chamber and the second accommodation chamber to be held in communication with each other, the first accommodation chamber, the second accommodation chamber, and the through bore being filled with lubricant agent and the ball members.

The fact that the torsional vibration attenuation apparatus according to the present invention may preferably further include a first thrust plate and a second thrust plate, the first thrust plate intervening between the intermediate cylindrical member and the first resilient member to form a first accommodation chamber together with the outer peripheral portion of the axial one end portion of the intermediate cylindrical member, and the second thrust plate intervening between the intermediate cylindrical member and the second resilient member to form a second accommodation chamber together with the outer peripheral portion of the axial other end portion of the intermediate cylindrical member, the intermediate cylindrical member being formed with a through bore allowing the first accommodation chamber and the second accommodation chamber to be held in communication with each other, the first accommodation chamber, the second accommodation chamber, and the through bore being filled with lubricant agent together with the ball members therein, so that when the intermediate cylindrical member is moved along the inner peripheral cylindrical member, the ball members can be circulated between the first screw portion and the second screw portion through the first accommodation chamber (or second accommodation chamber), the through bore, and the second accommodation chamber (or first accommodation chamber).

For this reason, the torsional vibration attenuation apparatus according to the present invention can reliably reduce the frictional resistances of the contact surfaces of the first screw portion and the second screw portion, thereby making it possible to smoothly move the intermediate cylindrical member along the inner peripheral cylindrical member.

### {Effects of Invention}

The present invention can provide a torsional vibration attenuation apparatus which can angularly widen the range of the torsion angle of the outer peripheral cylindrical member and the inner peripheral cylindrical member, thereby making it possible to reduce the torsional rigidity of the outer peripheral cylindrical member and the inner peripheral cylindrical member.

### {Brief Explanation of Drawings}

FIG. 1 shows the torsional vibration attenuation apparatus according to the present invention, and a front view of the torsional vibration attenuation apparatus.
FIG. 2 shows the torsional vibration attenuation apparatus according to the present invention, and a cross-sectional view taken along the line A-A in FIG. 1.
FIG. 3 shows the torsional vibration attenuation apparatus according to the present invention, and a cross-sectional view taken along the line B-B in FIG. 2.
FIG. 4 shows the torsional vibration attenuation apparatus according to the present invention, and a cross-sectional view of the outer peripheral cylindrical member.
FIG. 5 shows the torsional vibration attenuation apparatus according to the present invention, and an external view of the intermediate cylindrical member.
FIG. 6 shows the torsional vibration attenuation apparatus according to the present invention, and a fragmentary cross-sectional view showing the square screw thread portions formed on the outer peripheral cylindrical member and the intermediate cylindrical member.
FIG. 7 shows the torsional vibration attenuation apparatus according to the present invention, and shows the state in which the inner peripheral cylindrical member is distorted with respect to the outer peripheral cylindrical member
FIG. 8 shows the torsional vibration attenuation apparatus according to the present invention, and shows the state in which the inner peripheral cylindrical member is distorted with respect to the outer peripheral cylindrical member in a negative side.
FIG. 9 shows the torsional vibration attenuation apparatus according to the present invention, and shows the torsional characteristic of the inner peripheral cylindrical member and the outer peripheral cylindrical member.

### {Description of Embodiments}

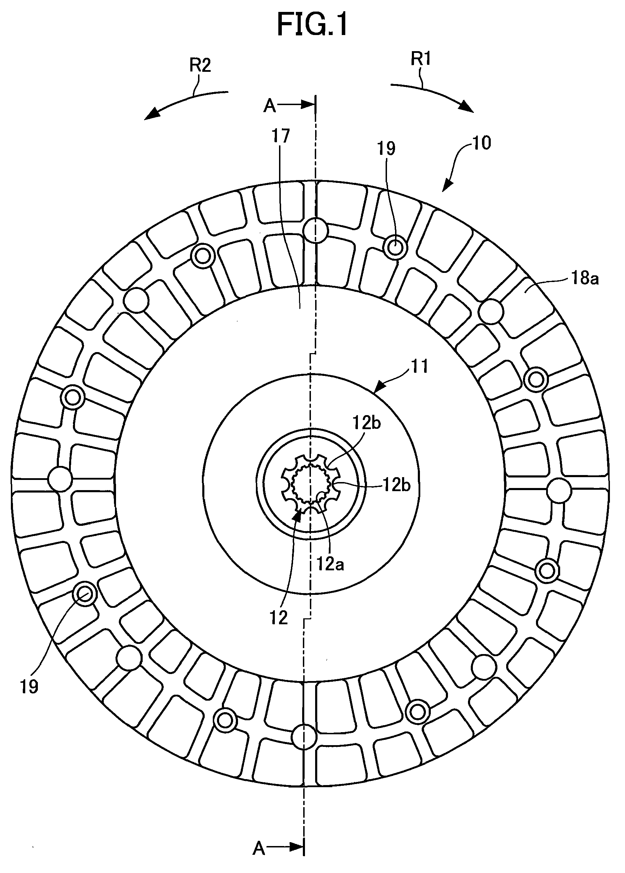

The torsional vibration attenuation apparatus according to the present invention will be described hereinafter with reference to the accompanying drawings. FIGS. 1 to 9 show the embodiment of the torsional vibration attenuation apparatus according to the present invention.

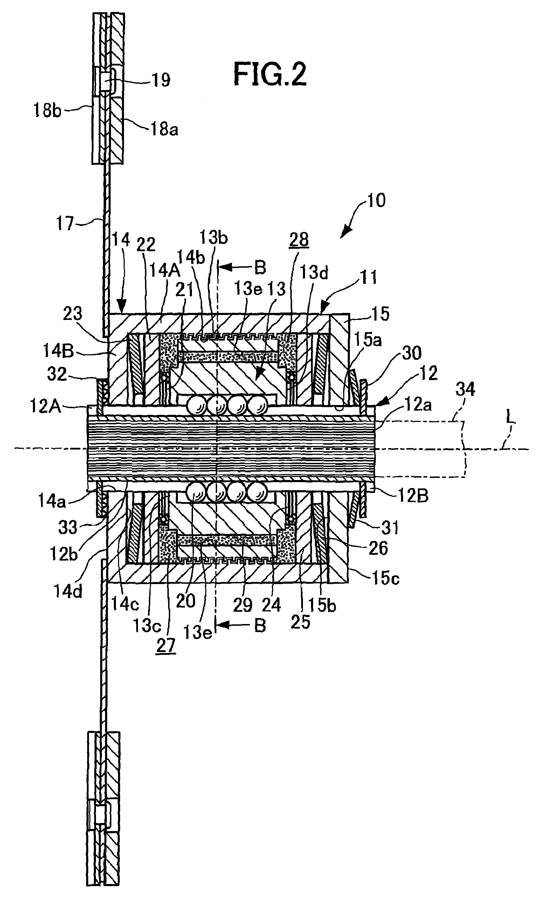

The construction of the torsional vibration attenuation apparatus according to the present invention will first be explained. FIGS. 1 and 2 illustrate a torsional vibration attenuation apparatus 10 which is constructed to include an outer peripheral cylindrical member 11, an inner peripheral cylindrical member 12, and an intermediate cylindrical member 13. The outer peripheral cylindrical member 11, the inner peripheral cylindrical member 12, and the intermediate cylindrical member 13 are relatively rotatable with respect to each other around their common center axis L.

The direction of the common center axis L will hereinafter be explained as an axial direction of the outer peripheral cylindrical member 11, the inner peripheral cylindrical member 12, and the intermediate cylindrical member 13.

The outer peripheral cylindrical member 11 includes a cup member 14 constituted by a cylindrical peripheral wall 14A having an open end at the right side in FIG. 2 and an annular side wall 14B closing the right side of the peripheral wall 14A, and a rear plate 15 fixed to the open end of the peripheral wall 14A.

The cup member 14 is provided with a cushioning plate 17 and friction materials 18a, 18b. The cushioning plate 17 is constructed by a ring-shaped member waved in the thickness direction of the cushioning plate 17, and is secured to the cup member 14 by fastening members such as rivets and bolts not shown in the drawings.

The friction materials 18a, 18b are secured to the both surface of the cushioning plate 17 by the rivets 19. The friction materials 18a, 18b are postponed between a flywheel not shown and secured to a crank shaft forming part of the internal combustion engine and a pressure plate forming part of a clutch cover secured to the flywheel by bolts.

When the friction materials 18a, 18b are pressed by the pressure plate to be brought into frictional engagement with the flywheel and the pressure plate, the rotational torque of the internal combustion engine is transmitted to the outer peripheral cylindrical member 11 through the friction materials 18a, 18b and the cushioning plate 17.

When the clutch pedal not shown is depressed, the pressure plate is released from pressing the friction materials 18a, 18b, thereby causing the friction materials 18a, 18b to be spaced apart from the flywheel, and thereby preventing the rotational torque of the internal combustion engine from being transmitted to the outer peripheral cylindrical member 11 through the friction materials 18a, 18b and the cushioning plate 17.

In the torsional vibration attenuation apparatus 10 according to the present embodiment, the cushioning plate 17 and the friction materials 18a, 18b collectively constitute a first power transmission unit as defined in the present invention. The outer peripheral cylindrical member 11 is constructed to support the first power transmission unit according to the present invention.

The side wall 14B of the cup member 14 is formed with an opening portion 14a, and the rear plate 15 is also formed with an opening portion 15a which is opposite to the opening portion 14a in the rotation axis L and has an area the same as that of the opening portion 14a.

The inner peripheral cylindrical member 12 is accommodated in the outer peripheral cylindrical member 11 in such a manner that the inner peripheral cylindrical member 12 is radially inwardly of the outer peripheral cylindrical member 11 to extend in the opening portions 14a and 15a previously mentioned. The direction of the rotation axis L of the inner peripheral cylindrical member 12 partly projects outwardly of the direction of the rotation axis L the outer peripheral cylindrical member 11. Here, the projection portions of the inner peripheral cylindrical member 12 constitute projection portion 12A, 12B as defined in the present invention.

The inner peripheral cylindrical member 12 has an inner peripheral portion formed with spline grooves 12a. The spline grooves 12a of the inner peripheral cylindrical member 12 are held in spline-engagement with an input shaft 34 partly forming a second power transmission unit as defined in the present invention.

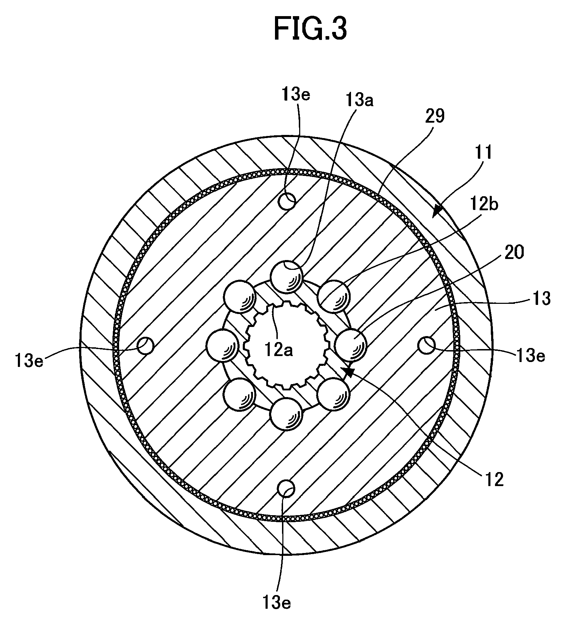

The inner peripheral cylindrical member 12 has an outer peripheral portion formed with spline grooves 12b. The spline grooves 12b of the inner peripheral cylindrical member 12 are held in spline-engagement with spline grooves 13a formed in the inner peripheral portion of the intermediate cylindrical member 13 through ball members 20 as shown in FIG. 3.

The intermediate cylindrical member 13 is held in ball-spline engagement with the inner peripheral cylindrical member 12, so that the intermediate cylindrical member 13 can be moved in the direction of the rotation axis L and not rotated with respect to the inner peripheral cylindrical member 12. This means that the inner peripheral cylindrical member 12 and the intermediate cylindrical member 13 can be rotated together with each other.

The opening portions 14a, 15a are each formed in a circularly shaped hole and not held in spline engagement with the spline grooves 12b of the inner peripheral cylindrical member 12, so that the outer peripheral cylindrical member 11 can be rotated relatively with respect to the inner peripheral cylindrical member 12.

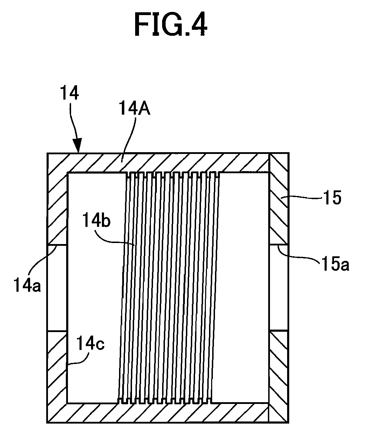

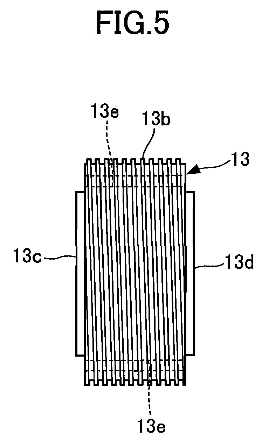

As shown in FIGS. 4, 5, the peripheral wall 14A of the cup member 14 has an inner peripheral portion formed with a square screw thread 14b constituting a first screw portion as defined in the present invention. The intermediate cylindrical member 13 has an outer peripheral portion formed with a square screw thread 13b constituting a second screw portion as defined in the present invention to be held in screw engagement with the outer peripheral portion of the intermediate cylindrical member 13.

This means that the intermediate cylindrical member 13 can be moved in the one side direction or the other side direction of the rotation axis L with respect to the inner peripheral cylindrical member 12 through the square screw threads 13b, 14b.

Between the inner peripheral portion 14c of the side wall 14B of the cup member 14 occupying the one end portion of the outer peripheral cylindrical member 11 in the direction of the rotation axis L of the inner peripheral cylindrical member 12 and the outer peripheral portion 13c of the intermediate cylindrical member 13 occupying the one end portion of the intermediate cylindrical member 13 in the direction of the rotation axis L of the inner peripheral cylindrical member 12 in FIG. 1 are disposed a thrust bearing 21, a thrust plate 22 constituting a first thrust plate, and a plate spring 23 constituting a first resilient member as defined in the present invention.

Between the inner peripheral portion 15b of the rear plate 15 occupying the other end portion of the outer peripheral cylindrical member 11 in the direction of the rotation axis L of the inner peripheral cylindrical member 12 and the outer peripheral portion 13d of the intermediate cylindrical member 13 occupying the other end portion of the intermediate cylindrical member 13 in the direction of the rotation axis L of the inner peripheral cylindrical member 12 are disposed a thrust bearing 24, a thrust plate 25 constituting a second thrust plate, and a plate spring 26 constituting a second resilient member as defined in the present invention.

The plate spring 23 is resiliently deformed when the intermediate cylindrical member 13 is moved in the one direction of the rotation axis L of the inner peripheral cylindrical member 12 by way of the square screw threads 13b, 14b, thereby urging the intermediate cylindrical member 13 in the other direction of the rotation axis L of the inner peripheral cylindrical member 12. Similarly, the plate spring 26 is resiliently deformed when the intermediate cylindrical member 13 is moved in the other direction of the rotation axis L of the inner peripheral cylindrical member 12 by way of the square screw threads 13b, 14b, thereby urging the intermediate cylindrical member 13 in the one direction of the rotation axis L of the inner peripheral cylindrical member 12.

The plate springs 23, 26 remain in their non-compressed states when the torsion angle of the outer peripheral cylindrical member 11 and the inner peripheral cylindrical member 12 is zero. This means that the intermediate cylindrical member 13 takes a neutral position when the plate springs 23, 26 remain in their non-compressed states.

The thrust bearing 21 intervenes between the thrust plate 22 and the outer peripheral portion 13c of the intermediate cylindrical member 13, while the thrust bearing 24 intervenes between the thrust plate 25 and the outer peripheral portion 13d of the intermediate cylindrical member 13, so that the thrust bearings 21, 24 can receive the thrust load of the intermediate cylindrical member 13.

For this reason, the thrust bearings 21, 24 can suppress the draw torque from being acted on the plate springs 23, 26 by the rotation of the intermediate cylindrical member 13 when the plate springs 23, 26 are compressed in the direction of the rotation axis L of the inner peripheral cylindrical member 12 through the thrust plates 22, 25.

The thrust plate 22 intervenes between the plate spring 23 and the thrust bearing 21 to be positioned between the plate spring 23 and the outer peripheral portion 13c of the intermediate cylindrical member 13. Between the radially outer portion of the thrust plate 22 and the outer peripheral portion 13c of the intermediate cylindrical member 13 is formed an accommodation chamber 27 constituting a first accommodation chamber as defined in the present invention.

The thrust plate 25 intervenes between the plate spring 26 and the thrust bearing 24 to be positioned between the plate spring 26 and the outer peripheral portion 13d of the intermediate cylindrical member 13. Between the radially outer portion of the thrust plate 25 and the outer peripheral portion 13d of the intermediate cylindrical member 13 is formed an accommodation chamber 28 constituting a second accommodation chamber as defined in the present invention.

On the other hand, the intermediate cylindrical member 13 is shown in FIGS. 1, 3, 5 to be formed with four through bores 13e extending in the direction of the rotation axis L of the inner peripheral cylindrical member 12. The through bores 13e are spaced apart from one another in the circumferential direction of the intermediate cylindrical member 13 to be held in communication with the accommodation chambers 27,28.

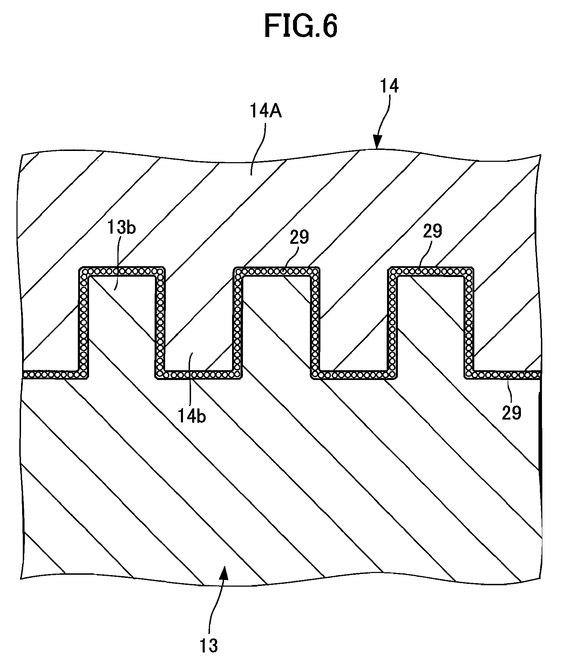

The torsional vibration attenuation apparatus 10 according to the present embodiment is shown in FIG. 6 to be provided with ball members 29 between the square screw threads 14b and the square screw threads 13b. The square screw threads 14b are formed on the inner peripheral portion of the peripheral wall 14A of the cup member 14 as an inner tooth, while the square screw thread 13b are formed on the outer peripheral portion of the intermediate cylindrical member 13 as an outer tooth. The ball members 29 are filled in the through bores 13e and the accommodation chambers 27,28.

Each of the ball members 29 is in the form of an extremely small spherical shape having a diameter for example of 0.5mm. The square screw threads 14b, 13b are held in screw engagement with each other by way of the ball members 29. For clearly show the state in which the ball members 29 filled in the through bores 13e and the accommodation chambers 27, 28 in FIG. 6, each of the ball members 29 is drawn to have a relatively large size, but actually has a size much more smaller than the size shown in FIG. 6.

Between the square screw threads 14b, 13b, and in the through bores 13e, and in the accommodation chambers 27, 28 are filled with grease serving as lubricant agents, so that the ball members 29 can smoothly be rotated between the square screw threads 14b, 13b, and in the through bores 13e, and in the accommodation chambers 27, 28.

As previously mentioned, the square screw threads 14b, 13b in the torsional vibration attenuation apparatus 10 according to the present embodiment are held in contact with each other through the ball members 29 filled in the grease, so that the frictional resistances of the contact surfaces of the square screw threads 14b, 13b can be reduced when the intermediate cylindrical member 13 is moved in the direction of the rotation axis L of the inner peripheral cylindrical member 12.

As shown in FIG. 1, the projection portion 12B forming the other projection portion in the direction of the rotation axis L of the inner peripheral cylindrical member 12 is attached with a C-shaped ring 30. A plate spring 31 intervenes between the C-shaped ring 30 and the outer peripheral portion 15c of the rear plate 15 forming the other peripheral portion in the direction of the rotation axis L of the outer peripheral cylindrical member 11.

The torsional vibration attenuation apparatus 10 according to the present embodiment is constructed to have the plate spring 31 intervening between the projection portion 12B of the inner peripheral cylindrical member 12 and the outer peripheral portion 15c of the plate spring 31. The C-shaped ring 30 and the plate spring 31 are adapted to urge the outer peripheral cylindrical member 11 in the one direction of the rotation axis L of the inner peripheral cylindrical member 12. The C-shaped ring 30 and the plate spring 31 of the torsional vibration attenuation apparatus 10 according to the present embodiment collectively constitute an urging unit as defined in the present invention.

The projection portion 12A forming one projection of the inner peripheral cylindrical member 12 has an outer peripheral portion provided with a friction material 32, while the side wall 14B forming one outer peripheral portion of the outer peripheral cylindrical member 11 in the direction of the rotation axis of the outer peripheral cylindrical member 11 has an outer peripheral portion 14d attached with a friction material 33 to be held in friction contact with the friction material 32.

The friction materials 32, 33 are adapted to generate a hysteresis torque between the outer peripheral cylindrical member 11 and the inner peripheral cylindrical member 12, resulting from the high contact pressures of the friction materials 32, 33 to be caused when the outer peripheral cylindrical member 11 is urged in the one direction of the rotation axis L of the outer peripheral cylindrical member 11 by the plate spring 31. The plate spring 31 and the friction materials 32, 33 in the torsional vibration attenuation apparatus 10 according to the present embodiment collectively constitute a hysteresis mechanism as defined in the present invention.

Next, the operation of the torsional vibration attenuation apparatus 10 will be described hereinafter. Here, the present embodiment will be explained with the rotation direction of the crank shaft of the internal combustion engine at the time of the forward advance of the vehicle as a R1 direction.

The present embodiment is constructed to have the square screw threads 13b, 14b respectively formed on the inner peripheral portion of the outer peripheral cylindrical member 11 and the outer peripheral portion of the intermediate cylindrical member 13 to have the intermediate cylindrical member 13 moved leftwardly in FIG. 2 when the inner peripheral cylindrical member 12 is rotated in the R2 direction, and to have the intermediate cylindrical member 13 moved rightwardly in FIG. 2 when the inner peripheral cylindrical member 12 is rotated in the R1 direction.

Initially, the friction materials 18a, 18b are pressed by the pressure plate to have the flywheel and the pressure plate brought into friction engagement with each other, so that the rotational torque of the internal combustion engine is inputted to the outer peripheral cylindrical member 11, thereby causing the outer peripheral cylindrical member 11 to be rotated in the R1direction.

When the outer peripheral cylindrical member 11 is rotated in the R1direction, the intermediate cylindrical member 13 is moved toward the inner peripheral portion 15b of the rear plate 15 in the direction of the rotation axis L of the inner peripheral cylindrical member 12 by way of the thrust bearings 21, 24, the thrust plates 22, 25, and the square screw thread 13b and the square screw thread 14b.

For this reason, the plate spring 26 is resiliently deformed between the inner peripheral portion 15b of the rear plate 15 and the thrust plate 25, thereby causing the reaction force (urging force) to be acted on the intermediate cylindrical member 13 from the plate spring 26.

The reaction force of the plate spring 26 is transmitted to the inner peripheral cylindrical member 12 through the intermediate cylindrical member 13 from the outer peripheral cylindrical member 11, thereby causing the power to be transmitted to the inner peripheral cylindrical member 12 from the outer peripheral cylindrical member 11, so that the driving force of the internal combustion engine can be transmitted to the input shaft 34 of the transmission through the torsional vibration attenuation apparatus 10.

Next, explanation will hereinafter be made about the operations in which the inner peripheral cylindrical member 12 is distorted with respect to the outer peripheral cylindrical member 11 in the positive direction (R2 direction) and the negative direction (R1 direction). The operation in which the inner peripheral cylindrical member 12 is distorted with respect to the outer peripheral cylindrical member 11 in the positive direction (R2 direction) is carried out at the acceleration time of the vehicle, while the operation in which the inner peripheral cylindrical member 12 is distorted with respect to the outer peripheral cylindrical member 11 in the negative direction (R1 direction) is carried out at the deceleration time of the vehicle when the engine brake is performed.

When the rotational fluctuation caused by the torque fluctuation of the internal combustion engine at the acceleration time of the vehicle is small, the fluctuation torque of the outer peripheral cylindrical member 11 and the inner peripheral cylindrical member 12 is small. This means that the inner peripheral cylindrical member 12 is distorted with respect to the outer peripheral cylindrical member 11 in the positive side (R2 direction).

At this time, the intermediate cylindrical member 13 is moved in the direction of the rotation axis L of the inner peripheral cylindrical member 12 toward the inner peripheral portion 15b of the rear plate 15 by way of the thrust bearings 21, 24, the thrust plates 22, 25, and the square screw thread 13b and the square screw thread 14b.

For this reason, the intermediate cylindrical member 13 is acted to press the plate spring 26 through the thrust bearing 24 and the thrust plate 25. In the state of the torsion angle of the outer peripheral cylindrical member 11 and the inner peripheral cylindrical member 12 being small, the resilient deformation amount of the plate spring 26 between the inner peripheral portion 15b of the rear plate 15 and the thrust plate 25 is small. This leads to the fact that the torsional rigidity of the outer peripheral cylindrical member 11 and the inner peripheral cylindrical member 12 is reduced by the small reaction force acted on the intermediate cylindrical member 13 from the plate spring 26.

The reaction force of the plate spring 26 is transmitted to the inner peripheral cylindrical member 12 through the intermediate cylindrical member 13 from the outer peripheral cylindrical member 11, so that the torsional vibrations of the outer peripheral cylindrical member 11 and the inner peripheral cylindrical member 12 can be absorbed and attenuated while the power is being transmitted to the inner peripheral cylindrical member 12 from the outer peripheral cylindrical member 11.

When the rotational fluctuation caused by the torque fluctuation of the internal combustion engine is increased, the fluctuation torque of the inner peripheral cylindrical member 12 and the outer peripheral cylindrical member 11 is enlarged, thereby leading to the fact that the inner peripheral cylindrical member 12 is further relatively distorted with respect to the outer peripheral cylindrical member 11 in the negative side (R1 direction), and that the torsion angle of the outer peripheral cylindrical member 11 and the inner peripheral cylindrical member 12 is further increased.

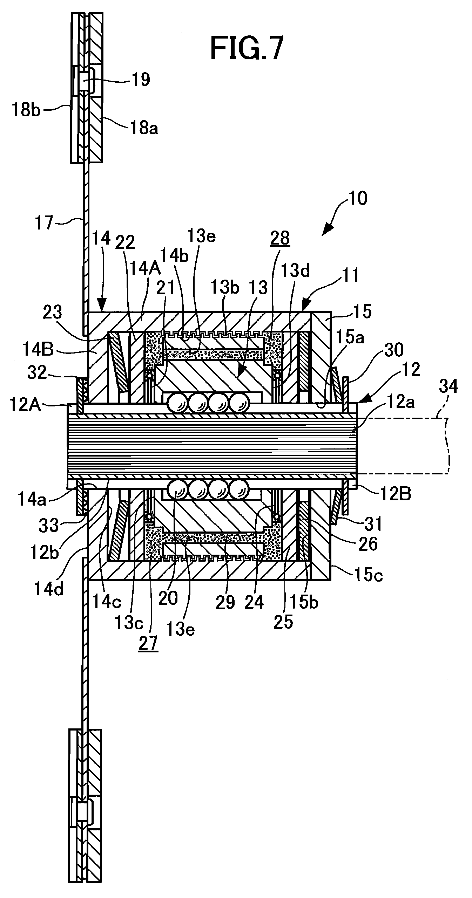

When the torsion angle of the outer peripheral cylindrical member 11 and the inner peripheral cylindrical member 12 is increased as shown in FIG. 7, the intermediate cylindrical member 13 is further moved in the direction of the rotation axis L of the inner peripheral cylindrical member 12 toward the inner peripheral portion 15b of the rear plate 15 by way of the thrust bearings 21, 24, the thrust plates 22, 25, and the square screw thread 13b and the square screw thread 14b.

For this reason, the intermediate cylindrical member 13 is acted to press the plate spring 26 at an even more strong pressing force through the thrust bearing 24 and the thrust plate 25. In the state of the torsion angle of the outer peripheral cylindrical member 11 and the inner peripheral cylindrical member 12 being large, the resilient deformation amount of the plate spring 26 between the inner peripheral portion 15b of the rear plate 15 and the thrust plate 25 is large, thereby acting the large reaction force on the intermediate cylindrical member 13 from the plate spring 26. This leads to the fact that the torsional rigidity of the outer peripheral cylindrical member 11 and the inner peripheral cylindrical member 12 is heightened by the large reaction force acted on the intermediate cylindrical member 13 from the plate spring 26.

The fact that the reaction force of the plate spring 26 is transmitted to the inner peripheral cylindrical member 12 from the outer peripheral cylindrical member 11 through the intermediate cylindrical member 13, leads to the fact that the torsional vibrations of the outer peripheral cylindrical member 11 and the inner peripheral cylindrical member 12 are absorbed and attenuated while the power is being transmitted to the inner peripheral cylindrical member 12 from the outer peripheral cylindrical member 11.

In addition, the fact that the grease and the extremely small ball members 29 are filled between the square screw threads 14b, 13b, and in the through bores 13e, and in the accommodation chambers 27, 28 to have the square screw threads 14b, 13b held in contact with each other through the ball members 29 filled in the grease, leads to the fact that the frictional resistances of the contact surfaces of the square screw threads 14b, 13b can be reduced when the intermediate cylindrical member 13 is moved in the direction of the rotation axis L of the inner peripheral cylindrical member 12. For this reason, the intermediate cylindrical member 13 can smoothly be moved along the inner peripheral cylindrical member 12.

When the intermediate cylindrical member 13 is smoothly rotated along the inner peripheral cylindrical member 12, the small ball members 29 can be circulated between the square screw threads 14b, 13b through the accommodation chambers 28, the through bores 13e, and the accommodation chambers 27. For this reason, the frictional resistances of the contact surfaces of the square screw threads 14b, 13b can reliably be reduced, thereby making it possible to smoothly move the intermediate cylindrical member 13 along the inner peripheral cylindrical member 12.

When the intermediate cylindrical member 13 is moved toward the inner peripheral portion 15b of the rear plate 15 through the square screw threads 14b, 13b, the intermediate cylindrical member 13 can be moved toward the inner peripheral portion 15b of the rear plate 15 while being smoothly rotated even in the case that the reaction force of the plate spring 26 is acted on the intermediate cylindrical member 13 through the thrust plate 25, resulting from the fact that the thrust bearings 24 for receiving the thrust load of the intermediate cylindrical member 13 intervenes between the thrust plate 25 and the outer peripheral portion 13d of the intermediate cylindrical member 13.

On the other hand, at the deceleration time of the vehicle, the driving torque of the internal combustion engine comes to be decreased, thereby causing the engine brake, so that the rotational torque is inputted to the inner peripheral cylindrical member 12 from the input shaft 34 of the transmission. When the rotational fluctuation caused by the torque fluctuation of the internal combustion engine at the deceleration time of the vehicle is small, the fluctuation torque of the outer peripheral cylindrical member 11 and the inner peripheral cylindrical member 12 is small. This means that the inner peripheral cylindrical member 12 is relatively distorted with respect to the outer peripheral cylindrical member 11 in the negative side (R1 direction).

When the inner peripheral cylindrical member 12 is relatively distorted with respect to the outer peripheral cylindrical member 11 in the negative side (R1 direction), the intermediate cylindrical member 13 is moved in the direction of the rotation axis L of the inner peripheral cylindrical member 12 toward the inner peripheral portion 14c of the side wall 14B by way of the thrust bearings 21, 24, the thrust plates 22, 25, and the square screw thread 13b and the square screw thread 14b.

For this reason, the intermediate cylindrical member 13 is acted to press the plate spring 23 through the thrust bearing 21 and the thrust plate 22. In the state of the torsion angle of the outer peripheral cylindrical member 11 and the inner peripheral cylindrical member 12 being small, the resilient deformation amount of the plate spring 23 between the inner peripheral portion 14c of the side wall 14B and the thrust plate 22 is small, thereby acting the small reaction force (urging force) on the intermediate cylindrical member 13 from the plate spring 23. This leads to the fact that the torsional rigidity of the outer peripheral cylindrical member 11 and the inner peripheral cylindrical member 12 is lowered by the small reaction acted on the intermediate cylindrical member 13 from the plate spring 23.

The fact that the reaction force of the plate spring 23 is transmitted to the inner peripheral cylindrical member 12 from the outer peripheral cylindrical member 11 through the intermediate cylindrical member 13, leads to the fact that the torsional vibrations of the outer peripheral cylindrical member 11 and the inner peripheral cylindrical member 12 are absorbed and attenuated while the power is being transmitted to the inner peripheral cylindrical member 12 from the outer peripheral cylindrical member 11.

When, on the other hand, the rotational fluctuation caused by the torque fluctuation of the internal combustion engine is increased, the fluctuation torque of the inner peripheral cylindrical member 12 and the outer peripheral cylindrical member 11 is enlarged. At this time, the inner peripheral cylindrical member 12 is further relatively distorted with respect to the outer peripheral cylindrical member 11 in the negative side (R1 direction), and thus the torsion angle of the outer peripheral cylindrical member 11 and the inner peripheral cylindrical member 12 is further increased.

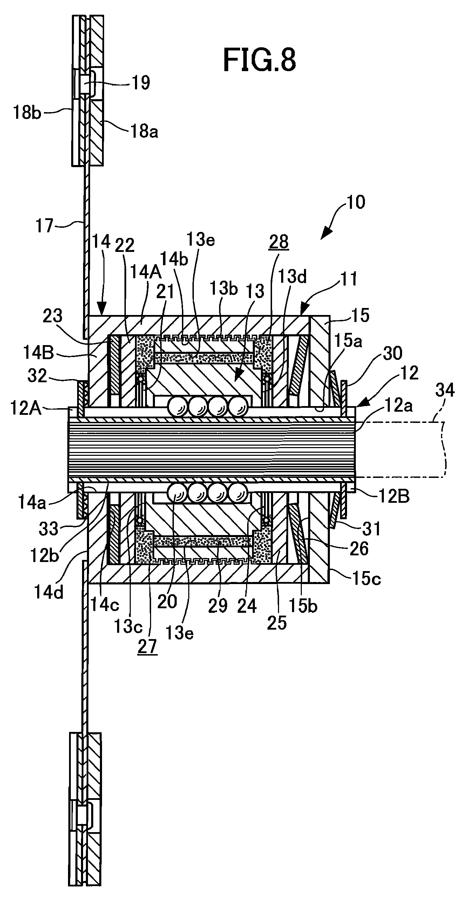

When the torsion angle of the outer peripheral cylindrical member 11 and the inner peripheral cylindrical member 12 is increased as shown in FIG. 8, the intermediate cylindrical member 13 is further moved in the direction of the rotation axis L of the inner peripheral cylindrical member 12 toward the inner peripheral portion 14c of the side wall 14B by way of the thrust bearings 21, 24, the thrust plates 22, 25, and the square screw thread 13b and the square screw thread 14b.

For this reason, the intermediate cylindrical member 13 is acted to press the plate spring 23 at an even more strong pressing force through the thrust bearing 21 and the thrust plate 22. In the state of the torsion angle of the outer peripheral cylindrical member 11 and the inner peripheral cylindrical member 12 being large, the resilient deformation amount of the plate spring 23 between the inner peripheral portion 14c of the side wall 14B and the thrust plate 22 is large, thereby acting the large reaction force (urging force) on the intermediate cylindrical member 13 from the plate spring 23. This leads to the fact that the torsional rigidity of the outer peripheral cylindrical member 11 and the inner peripheral cylindrical member 12 is heightened by the large reaction force acted on the intermediate cylindrical member 13 from the plate spring 23.

The fact that the reaction force of the plate spring 23 is transmitted to the inner peripheral cylindrical member 12 from the outer peripheral cylindrical member 11 through the intermediate cylindrical member 13, leads to the fact that the torsional vibrations of the outer peripheral cylindrical member 11 and the inner peripheral cylindrical member 12 are absorbed and attenuated while the power is being transmitted to the inner peripheral cylindrical member 12 from the outer peripheral cylindrical member 11.

In addition, the fact that the grease and the extremely small ball members 29 are filled between the square screw threads 14b, 13b, and in the through bores 13e, and in the accommodation chambers 27, 28 to have the square screw threads 14b, 13b held in contact with each other through the ball members 29 filled in the grease, leads to the fact that the frictional resistances of the contact surfaces of the square screw threads 14b, 13b can be reduced when the intermediate cylindrical member 13 is moved in the direction of the rotation axis L of the inner peripheral cylindrical member 12. For this reason, the intermediate cylindrical member 13 can smoothly be moved along the inner peripheral cylindrical member 12.

When the intermediate cylindrical member 13 is moved toward the inner peripheral portion 14c of the side wall 14B through the square screw thread 13b and the square screw thread 14b, the ball members 29 intervening between the square screw thread 13b and the square screw thread 14b are pushed out toward the accommodation chamber 27 while rolling between the square screw thread 13b and the square screw thread 14b.

In this case, there is a possibility that the ball members 29 are moved to the accommodation chamber 27, thereby decreasing the volume of the ball members 29 in the accommodation chamber 28, and thereby leading to the shortage of the ball members 29 between the square screw thread 13b and the square screw thread 14b, resulting from the fact that the volume of the accommodation chamber 27 is equal to that of the accommodation chamber 28.

The torsional vibration attenuation apparatus 10 according to the present embodiment is constructed to have the four through bores 13e formed to extend in the direction of the rotation axis L of the intermediate cylindrical member 13, so that the ball members 29 pushed out to the accommodation chamber 27 cam be circulated to the accommodation chamber 28 through the through bores 13e, thereby making it possible supply the ball members 29 to a space formed between the square screw thread 13b and the square screw thread 14b from the accommodation chamber 28.

The torsional vibration attenuation apparatus 10 according to the present embodiment can circulate the ball members 29 between the square screw thread 13b and the square screw thread 14b through the accommodation chamber 27, the through bores 13e, and the accommodation chamber 28. Therefore, the frictional resistances of the contact surfaces of the square screw threads 14b, 13b can reliably be reduced, thereby making it possible to smoothly move the intermediate cylindrical member 13 along the inner peripheral cylindrical member 12.

When the intermediate cylindrical member 13 is moved toward the inner peripheral portion 14c of the side wall 14B through the square screw thread 13b and the square screw thread 14b, the intermediate cylindrical member 13 can be moved toward the inner peripheral portion 14c of the side wall 14B while being smoothly rotated even in the case that the reaction force of the plate spring 23 is acted on the intermediate cylindrical member 13 through the thrust plate 22, resulting from the fact that the thrust bearings 21 for receiving the thrust load of the intermediate cylindrical member 13 intervenes between the thrust plate 22 and the outer peripheral portion 13c of the intermediate cylindrical member 13.

Further, the fact that the torsional vibration attenuation apparatus 10 according to the present embodiment is constructed to have the C-shaped ring 30 and the plate spring 31 intervene between the projection portion 12B of the inner peripheral cylindrical member 12 and the outer peripheral portion 15c of the rear plate 15 to urge the outer peripheral cylindrical member 11 to the one direction of the rotation axis L of the inner peripheral cylindrical member 12, and to have the friction materials 32, 33 intervene between the projection portion 12A of the inner peripheral cylindrical member 12 and the outer peripheral portion 14d of the side wall 14B, so that the hysteresis torque can be generated between the outer peripheral cylindrical member 11 and the inner peripheral cylindrical member 12.

cancelled

cancelled

cancelled

cancelled

cancelled

cancelled

cancelled

cancelled

cancelled

cancelled

cancelled

cancelled

cancelled

When, on the other hand, the torsional vibration attenuation apparatus 10 comes to be under the operation such as a neutral state in which the driving torque of the internal combustion engine is not transmitted, the torsion angle of the outer peripheral cylindrical member 11 and the inner peripheral cylindrical member 12 comes to be zero. At this time, the torsional vibration attenuation apparatus 10 is returned to the original state in which the outer peripheral cylindrical member 11 and the inner peripheral cylindrical member 12 are not relatively rotated with each other from the state in which the outer peripheral cylindrical member 11 and the inner peripheral cylindrical member 12 are relatively rotated with each other.

At this time, the intermediate cylindrical member 13 is rotated in the direction of the rotation axis L of the inner peripheral cylindrical member 12 through the square screw thread 13b and the square screw thread 14b to be returned to its neutral position. This neutral position indicates a position where the plate spring 23 and the plate spring 26 are brought into the non-compressed state to have their resilient deformation amounts equal to each other.

In addition, the fact that the square screw threads 14b, 13b are held in contact with each other through the ball members 29 filled in the grease, leads to the fact that the frictional resistances of the contact surfaces of the square screw threads 14b, 13b can be reduced when the intermediate cylindrical member 13 is moved in the direction of the rotation axis L of the inner peripheral cylindrical member 12. For this reason, the intermediate cylindrical member 13 can smoothly be moved in the direction of the rotation axis L of the inner peripheral cylindrical member 12 to be returned to its neutral position by the urging forces of the plate spring 23 and the plate spring 26.

As previously mentioned, the torsional vibration attenuation apparatus 10 of the present embodiment is constructed to have the inner peripheral portion of the outer peripheral cylindrical member 11 and the outer peripheral portion of the intermediate cylindrical member 13 connected with each other through the square screw threads 13b, 14b, to have the inner peripheral portion of the intermediate cylindrical member 13 and the outer peripheral portion of the inner peripheral cylindrical member 12 held in ball-spline engagement with each other, to have the plate spring 23 intervene between the inner peripheral portion 14c of the side wall 14B of the cup member 14 and the outer peripheral portion 13c of the intermediate cylindrical member 13, and to have the plate spring 26 intervene between the inner peripheral portion 15b of the rear plate 15 and the outer peripheral portion 13d of the intermediate cylindrical member 13.

Further, the torsional vibration attenuation apparatus 10 of the present embodiment is constructed to have the intermediate cylindrical member 13 urged toward the inner peripheral portion 15b of the rear plate 15 by the plate spring 23 resiliently deformed when the intermediate cylindrical member 13 is moved toward the inner peripheral portion 14c of the side wall 14B of the cup member 14, and to have the intermediate cylindrical member 13 urged toward the inner peripheral portion 14c of the side wall 14B of the cup member 14 by the plate spring 26 resiliently deformed when the intermediate cylindrical member 13 is moved toward the inner peripheral portion 15b of the rear plate 15.

For this reason, the intermediate cylindrical member 13 can be moved in the direction of the rotation axis L of the inner peripheral cylindrical member 12 in response to the torsion angle of the outer peripheral cylindrical member 11 and the inner peripheral cylindrical member 12 when the outer peripheral cylindrical member 11 and the inner peripheral cylindrical member 12 are distorted with each other, thereby generating the reaction forces of the plate springs 23, 26, and thereby making it possible to generate the torsional characteristic between the outer peripheral cylindrical member 11 and the inner peripheral cylindrical member 12. For this reason, the torsional vibrations of the outer peripheral cylindrical member 11 and the inner peripheral cylindrical member 12 can be absorbed and attenuated while the power is being transmitted between the inner peripheral cylindrical member 12 and the outer peripheral cylindrical member 11.

Further, the outer peripheral cylindrical member 11, the intermediate cylindrical member 13, and the inner peripheral cylindrical member 12 are constructed to increase the movement amount of the intermediate cylindrical member 13 in the direction of the rotation axis L of the intermediate cylindrical member 13, thereby making it possible to angularly widen the range of the torsion angle, and thereby making it possible to reduce the torsional rigidity of the outer peripheral cylindrical member 11 and the inner peripheral cylindrical member 12.

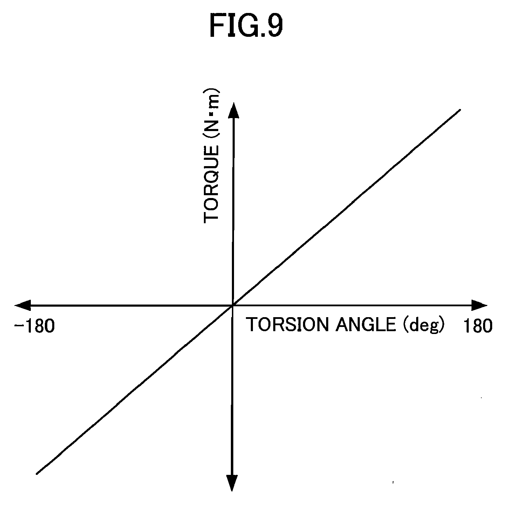

Here, the torsional vibration attenuation apparatus 10 of the present embodiment is constructed to have the torsion angle be in the range of approximately 360 degrees totaling the positive and negative sides as shown in FIG. 9, in contrast with the conventional torsional vibration attenuation apparatus constructed to have the torsion angle be in the range of approximately 60 degrees totaling the positive and negative sides. This means that the torsional vibration attenuation apparatus 10 of the present embodiment can be constructed to decrease the whole rigidity to a level lower than that of the conventional torsional vibration attenuation apparatus.

As a consequence, the torsional vibration attenuation apparatus 10 according to the present invention can attenuate large torsional vibrations originated from the rotational fluctuation caused by the torque fluctuation of the drive source and the torsional resonance of the driveline while the vehicle having a large rotational torque to be transmitted from the outer peripheral cylindrical member 11 to the inner peripheral cylindrical member 12 is at the acceleration and deceleration times, and can suppress the "jara sound" generated by the idling gear couples of the transmission gear couples collided by the torsional vibrations and the muffled sounds generated by the torsional resonance of the driveline.

Further, the torsional characteristic of the torsional vibration attenuation apparatus 10 is not limited to 360 degrees totaling the positive and negative sides, but can be extended to more than 360 degrees totaling the positive and negative sides by adjustably set the length of the outer peripheral cylindrical member 11, the inner peripheral cylindrical member 12, and the intermediate cylindrical member 13 in the direction of the rotation axis L of the intermediate cylindrical member 13, the pitches of the square screw threads 13b, 14b, and other factors.

Further, the torsional vibration attenuation apparatus 10 according to the present embodiment can generate the torsional characteristic between the outer peripheral cylindrical member 11 and the inner peripheral cylindrical member 12 by the reaction force (urging force) of the compressed plate springs 23, 26, thereby making it possible not to require the preliminary large loads to be imparted to the plate springs 23, 26.

For this reason, the plate springs 23, 26 can promptly be compressed, thereby promptly generating the torsional characteristic when the intermediate cylindrical member 13 is moved in the direction of the rotation axis of the intermediate cylindrical member 13, thereby making it possible to even further suppress the "jara" sounds and the muffled sounds from being generated.

Further, the torsional vibration attenuation apparatus 10 according to the present embodiment is constructed to have the extremely small ball members 29 between the square screw threads 13b and the square screw threads 14b, so that the frictional resistances of the contact surfaces of the square screw thread 13b and the square screw thread 14b can be reduced, thereby making it possible to smoothly move the intermediate cylindrical member 13 in the direction of the rotation axis L of the inner peripheral cylindrical member 12.

For this reason, the intermediate cylindrical member 13 can smoothly be moved in the direction of the rotation axis of the intermediate cylindrical member 13 by the urging forces of the plate springs 23, 26, thereby making it possible to return the intermediate cylindrical member 13 to the neutral position when the torsion angle of the outer peripheral cylindrical member 11 and the inner peripheral cylindrical member 12 comes to be zero at the neutral time of the intermediate cylindrical member 13.

Further, the torsional vibration attenuation apparatus 10 according to the present embodiment is constructed to have the ball members 29 and the grease intervene between the square screw threads 13b and the square screw threads 14b in order to reduce the frictional resistances of the contact surfaces of the square screw thread 13b and the square screw thread 14b. According to the present invention, the torsional vibration attenuation apparatus 10 according to the present embodiment thus constructed may be replaced by the torsional vibration attenuation apparatus in which the contact surfaces of the square screw thread 13b and the square screw thread 14b are coated with a low friction material such as Teflon (registered trademark).

Further, the torsional vibration attenuation apparatus 10 according to the present embodiment is constructed to have the inner peripheral portion of the outer peripheral cylindrical member 11 and the outer peripheral portion of the intermediate cylindrical member 13 are connected with each other through the square screw threads 13b, 14b, so that the whole surfaces of the square screw threads 13b, 14b can be formed into surface contacts, respectively.

For this reason, the surface contacts of the first screw portion and the second screw portion can prevent the torque transmission components from being generated on the tapered surfaces in the direction of the rotation axis L of the intermediate cylindrical member 13 as seen in a triangle screw thread having tapered surfaces when the intermediate cylindrical member 13 is moved in the direction of the rotation axis L of the intermediate cylindrical member 13 through the square screw threads 13b, 14b, so that the torsional vibration attenuation apparatus 10 according to the present embodiment can have the torque transmission components to the square screw threads 13b, 14b only in the direction of the rotation axis L of the intermediate cylindrical member 13.

This means that the torsional vibration attenuation apparatus 10 according to the present embodiment can suppress the power transmission loss between the outer peripheral cylindrical member 11 and the inner peripheral cylindrical member 12 by way of the plate springs 23, 26 and the intermediate cylindrical member 13, thereby improving the power transmission property of the torsional vibration attenuation apparatus 10.

Further, the torsional vibration attenuation apparatus 10 according to the present embodiment is constructed to have the thrust bearings 21, 24 between the intermediate cylindrical member 13 and the plate spring 23 and between the intermediate cylindrical member 13 and the plate spring 26, thereby making it possible to prevent the drag torques between the intermediate cylindrical member 13 and the plate springs 23, 26. This means that the torsional vibration attenuation apparatus 10 according to the present invention can smoothly rotate the intermediate cylindrical member 13 with respect to the plate springs 23, 26, thereby making it possible to improve the operation property of the torsional vibration attenuation apparatus 10.

Further, the torsional vibration attenuation apparatus 10 according to the present embodiment is constructed to have the inner peripheral portion of the intermediate cylindrical member 13 held in ball-spline engagement with the outer peripheral portion of the inner peripheral cylindrical member 12, so that the intermediate cylindrical member 13 can smoothly be moved in the direction of the rotation axis of the inner peripheral cylindrical member 12, thereby making it possible to improve the operation property of the torsional vibration attenuation apparatus 10.

Further, the ball-spline engagement in the torsional vibration attenuation apparatus 10 may be replaced by the spline engagement of the inner peripheral portion of the intermediate cylindrical member 13 and the outer peripheral portion of the inner peripheral cylindrical member 12 both of which are formed with splines, respectively according to the present invention.

Further, the torsional vibration attenuation apparatus 10 according to the present embodiment is constructed to have the both end portions of the inner peripheral cylindrical member 12 projected outwardly of the both end portions of the outer peripheral cylindrical member 11 in the direction of the rotation axis L of the inner peripheral cylindrical member 12, and to have the hysteresis mechanism provided between the outer peripheral cylindrical member 11 and the inner peripheral cylindrical member 12.

The above hysteresis mechanism is constructed to include the C-shaped ring 30 and the plate spring 31 and the friction materials 32, 33. The C-shaped ring 30 and the plate spring 31 are provided between the projection portion 12B of the inner peripheral cylindrical member 12 and the outer peripheral portion 15c of the rear plate 15 to urge the outer peripheral cylindrical member 11 to the other direction of the rotation axis L of the inner peripheral cylindrical member 12. The friction materials 32, 33 are provided between the projection portion 12A of the inner peripheral cylindrical member 12 and the outer peripheral portion 14d of the side wall 14B to generate the frictional force between the projection portion 12A of the inner peripheral cylindrical member 12 and the outer peripheral portion 14d of the side wall 14B by the urging force of the plate spring 31.

For this reason, the hysteresis torques can be generated between the outer peripheral cylindrical member 11 and the inner peripheral cylindrical member 12 when the torsional resistance is generated in the driveline having the transmission at the acceleration and deceleration times of the vehicle. As a consequence, the torsional resonance of the driveline can even further be suppressed, thereby making it possible to even further suppress the muffled sounds from being generated.

The torsional vibration attenuation apparatus 10 according to the present embodiment is constructed to employ the plate springs 23, 26 as resilient members, however, the plate springs 23, 26 may be replaced by other resilient members such as coil springs, and the like. The plate springs 23, 26 may be replaced by any other resilient members which can be deformed when being applied with the loads and can be returned to their original states when being free from the loads.

The above hysteresis mechanism may be constructed to include the friction materials 32, 33 and the C-shaped ring 30 and the plate spring 31. The friction materials 32, 33 are provided between the projection portion 12B of the inner peripheral cylindrical member 12 and the outer peripheral portion 15c of the rear plate 15, while the C-shaped ring 30 and the plate spring 31 are provided between the projection portion 12A of the inner peripheral cylindrical member 12 and the outer peripheral portion 14d of the side wall 14B.

In the above hysteresis mechanism, the friction materials 32, 33 are brought into contact with each other at a relatively high contact pressure when the outer peripheral cylindrical member 11 is urged in the other direction of the rotation axis L of the outer peripheral cylindrical member 11 by the urging force of the plate spring 31, thereby generating the hysteresis torque between the outer peripheral cylindrical member 11 and the inner peripheral cylindrical member 12.

Further, the torsional vibration attenuation apparatus 10 according to the present embodiment is constructed to be provide between the internal combustion engine of the vehicle and the driveline having the transmission, however, the present invention is not limited to this type of the torsional vibration attenuation apparatus, but can include any other type of the torsional vibration attenuation apparatus to be provided in the driveline of the vehicle and the like.

Further, the torsional vibration attenuation apparatus 10 according to the present embodiment may be applied for example to a torsional vibration attenuation apparatus of a hybrid vehicle such as a hybrid damper which is provided between the output shaft of the internal combustion engine and a power dividing mechanism for dividing the power to an electric motor and a wheel side output shaft.

Further, the torsional vibration attenuation apparatus 10 according to the present embodiment may be applied to a torsional vibration attenuation apparatus such as a lock-up damper which is provided between a lock-up clutch apparatus of a torque convertor and the transmission gear couple. Further, the torsional vibration attenuation apparatus may be provided between a differential case and a ring gear provided on the outer peripheral portion of the differential case.

The previously mentioned embodiment has been raised as an example for explaining the invention, and thus the present invention is not limited to this embodiment. The scope of the present invention is required to be construed based on the claims without limiting to the explained embodiment as previously mentioned. All the modifications, the alterations and the equivalents should be included within the scope of the invention defined by the claims.

From the foregoing description, it will be understood that the torsional vibration attenuation apparatus according to the present invention has such an advantageous effect that can angularly widen the range of the torsion angle of the outer peripheral cylindrical member and the inner peripheral cylindrical member, thereby making it possible to reduce the torsional rigidity of the outer peripheral cylindrical member and the inner peripheral cylindrical member. The torsional vibration attenuation apparatus according to the present invention is useful as a torsional vibration attenuation apparatus which can transmit the power while absorbing the torsional vibrations between the outer peripheral cylindrical member and the inner peripheral cylindrical member.

### {Explanation of Reference Numerals}

- 10:: torsional vibration attenuation apparatus
- 11:: outer peripheral cylindrical member
- 12:: inner peripheral cylindrical member
- 12A, 12B:: projection portion
- 12b:: spline groove
- 13:: intermediate cylindrical member
- 13a:: spline groove
- 13b:: square screw thread (second screw portion)
- 13c:: outer peripheral portion (outer peripheral portion of the axial one end portion of the intermediate cylindrical member)
- 13d:: outer peripheral portion (outer peripheral portion of the axial other end portion of the intermediate cylindrical member)
- 13e:: through bores
- 14b:: square screw thread (first screw portion)
- 14c:: inner peripheral portion (inner peripheral portion of the axial one end portion of the outer peripheral cylindrical member)
- 15b:: inner peripheral portion (inner peripheral portion of the axial other end portion of the outer peripheral cylindrical member)
- 17:: cushioning plate (first power transmission member)
- 18a, 18b:: friction material (first power transmission member)
- 20, 29:: ball member
- 21, 24:: thrust bearing
- 22:: thrust plate (first thrust plate)
- 23:: plate spring (first resilient member)
- 25:: thrust plate (second thrust plate)
- 26:: plate spring (second resilient member)
- 27:: accommodation chamber (first accommodation chamber)
- 28:: accommodation chamber (second accommodation chamber)
- 30:: C-shaped ring (hysteresis mechanism)
- 31:: plate spring (hysteresis mechanism)
- 32, 33:: friction material (hysteresis mechanism)
- 34:: input shaft (second power transmission member)

## Claims

1. A torsional vibration attenuation apparatus (10) comprising:
an outer peripheral cylindrical member (11) supporting a first power transmission unit (17, 18a, 18b) and having an inner peripheral portion formed with a first screw portion (14b);
an inner peripheral cylindrical member (12) supporting a second power transmission unit (34) and provided in the outer peripheral cylindrical member (11);
an intermediate cylindrical member (13) provided between the inner peripheral portion of the outer peripheral cylindrical member (11) and the outer peripheral portion of the inner peripheral cylindrical member (12) and having an outer peripheral portion formed with a second screw portion (13b) to be screwed with the first screw portion (14b) and an inner peripheral portion splined with the outer peripheral portion of the cylindrical inner peripheral portion, the intermediate cylindrical member (13) being axially movable along the outer peripheral cylindrical member (11);
a first resilient member (23) intervening between the inner peripheral portion of the axial one end portion of the outer peripheral cylindrical member (11) and the outer peripheral portion of the axial one end portion of the intermediate cylindrical member (13);
a second resilient member (26) intervening between the inner peripheral portion of the axial other end portion of the outer peripheral cylindrical member (11) and the outer peripheral portion of the axial other end portion of the intermediate cylindrical member (13); **characterized by** further comprising
a plurality of ball members ( 29) intervening between the first screw portion (14b) and the second screw portion (13b),
wherein both axial end portions of the inner peripheral cylindrical member (12) are formed to have respective projecting portions projecting axially outwardly from the axially both end portions of the outer peripheral cylindrical member (11), and wherein the torsional vibration attenuation apparatus (10) further comprises: a hysteresis mechanism (30, 31, 32, 33) provided between the inner peripheral cylindrical member (12) and the outer peripheral cylindrical member (11), the hysteresis mechanism (30, 31, 32, 33) including an urging member (31) and a friction member (32, 33), the urging member (31) being provided between one of the projection portions of the inner peripheral cylindrical member (12) and the outer peripheral portion of one of the axial ends of the outer peripheral cylindrical member (11) to urge the outer peripheral cylindrical member (11) toward the axial other ends of the inner peripheral cylindrical member (12), and the friction member (32, 33) being provided between the other of the projection portions of the inner peripheral cylindrical member (12) and the outer peripheral portion of the other of the axial ends of the outer peripheral cylindrical member (11) to generate friction force.

2. The torsional vibration attenuation apparatus (10) as set forth in claim 1, further comprising a first thrust plate (22) and a second thrust plate (25), the first thrust plate (22) intervening between the intermediate cylindrical member (13) and the first resilient member (23) to form a first accommodation chamber together with the outer peripheral portion of the axial one end portion of the intermediate cylindrical member (13), and the second thrust plate (25) intervening between the intermediate cylindrical member (13) and the second resilient member (26) to form a second accommodation chamber together with the outer peripheral portion of the axial other end portion of the intermediate cylindrical member (13), the intermediate cylindrical member (13) being formed with a through bore allowing the first accommodation chamber and the second accommodation chamber to be held in communication with each other, the first accommodation chamber, the second accommodation chamber, and the through bore being filled with lubricant agent together with the ball members (20, 29).

## Patentansprüche

1. Torsionsschwingungs-Dämpfungsvorrichtung (10), aufweisend:
ein äußeres peripheres zylindrisches Element (11), das eine erste Leistungsübertragungseinheit (17, 18a, 18b) trägt und einen inneren peripheren Abschnitt aufweist, der mit einem ersten Schraubabschnitt (14b) ausgebildet ist;
ein inneres peripheres zylindrisches Element (12), das eine zweite Leistungsübertragungseinheit (34) trägt und sich in dem äußeren peripheren zylindrischen Element (11) befindet;
ein zylindrisches Zwischenelement (13), das sich zwischen dem inneren peripheren Abschnitt des äußeren peripheren zylindrischen Elements (11) und dem äußeren peripheren Abschnitt des inneren peripheren zylindrischen Elements (12) befindet und einen äußeren peripheren Abschnitt aufweist, der mit einem zweiten Schraubabschnitt (13b) ausgebildet ist, der mit dem ersten Schraubabschnitt (14b) und einem inneren peripheren Abschnitt, der mit dem äußeren peripheren Abschnitt des zylindrischen inneren peripheren Abschnitts kerbverzahnt ist, verschraubt ist,
wobei das zylindrische Zwischenelement (13) axial entlang des äußeren peripheren zylindrischen Elements (11) beweglich ist;
ein erstes elastisches Element (23), das sich zwischen dem inneren peripheren Abschnitt des einen axialen Endabschnitts des äußeren peripheren zylindrischen Elements (11) und dem äußeren peripheren Abschnitt des einen axialen Endabschnitts des zylindrischen Zwischenelements (13) befindet;
ein zweites elastisches Element (26), das sich zwischen dem inneren peripheren Abschnitt des anderen axialen Endabschnitts des äußeren peripheren zylindrischen Elements (11) und dem äußeren peripheren Abschnitt des anderen axialen Endabschnitts des zylindrischen Zwischenelements (13) befindet;
**dadurch gekennzeichnet, dass** sie ferner aufweist:
eine Mehrzahl an Kugelelementen (29), die sich zwischen dem ersten Schraubabschnitt (14b) und dem zweiten Schraubabschnitt (13b) befinden,
wobei beide axialen Endabschnitte des inneren peripheren zylindrischen Elements (12) so ausgebildet sind, dass sie jeweils herausragende Abschnitte aufweisen, die von den beiden axialen Endabschnitten des äußeren peripheren zylindrischen Elements (11) axial nach außen ragen, und wobei die Torsionsschwingungs-Dämpfungsvorrichtung (10) ferner aufweist: einen Hysteresemechanismus (30, 31, 32, 33), der sich zwischen dem inneren peripheren zylindrischen Element (12) und dem äußeren peripheren zylindrischen Element (11) befindet, wobei der Hysteresemechanismus (30, 31, 32, 33) ein Drückelement (31) und ein Friktionselement (32, 33) beinhaltet, wobei sich das Drückelement (31) zwischen einem von den herausragenden Abschnitten des inneren peripheren zylindrischen Elements (12) und dem äußeren peripheren Abschnitt von einem der Axialenden des äußeren peripheren zylindrischen Elements (11) befindet, um das äußere periphere zylindrische Element (11) in Richtung der anderen Axialenden des inneren peripheren zylindrischen Elements (12) zu drücken, und wobei sich das Friktionselement (32, 33) zwischen dem anderen der herausragenden Abschnitte des inneren peripheren zylindrischen Elements (12) und dem anderen peripheren Abschnitt des anderen der Axialenden des äußeren zylindrischen Elements (11) befindet, um Friktionskraft zu erzeugen.

2. Torsionsschwingungs-Dämpfungsvorrichtung (10) nach Anspruch 1, ferner aufweisend ein erstes Schubblech (22) und ein zweites Schubblech (25), wobei sich das erste Schubblech (22) zwischen dem zylindrischen Zwischenelement (13) und dem ersten elastischen Element (23) befindet, um eine erste Aufnahmekammer zusammen mit dem äußeren peripheren Abschnitt des einen axialen Endabschnitts des zylindrischen Zwischenelements (13) zu bilden, und wobei sich das zweite Schubblech (25) zwischen dem zylindrischen Zwischenelement (13) und dem zweiten elastischen Element (26) befindet, um eine zweite Aufnahmekammer zusammen mit dem äußeren peripheren Abschnitt des anderen axialen Endabschnitts des zylindrischen Zwischenelements (13) zu bilden, wobei das zylindrische Zwischenelement (13) mit einer Durchgangsbohrung ausgebildet ist, die die erste Aufnahmekammer und die zweite Aufnahmekammer miteinander in Verbindung hält, wobei die erste Aufnahmekammer, die zweite Aufnahmekammer und die Durchgangsbohrung mit einem Schmiermittel zusammen mit den Kugelelementen (20, 29) gefüllt sind.

## Revendications

1. Appareil d'atténuation de vibrations de torsion (10) comprenant :
un élément cylindrique périphérique externe (11) supportant une première unité de transmission de puissance (17, 18a, 18b) et ayant une partie périphérique interne formée avec une première partie de vis (14b) ;
un élément cylindrique périphérique interne (12) supportant une seconde unité de transmission de puissance (34) et ménagé dans l'élément cylindrique périphérique externe (11) ;
un élément cylindrique intermédiaire (13) ménagé entre la partie périphérique interne de l'élément cylindrique périphérique externe (11) et la partie périphérique externe de l'élément cylindrique périphérique interne (12) et ayant une partie périphérique externe formée avec une seconde partie de vis (13b) à visser avec la première partie de vis (14b), et une partie périphérique interne cannelée avec la partie périphérique externe de la partie périphérique interne cylindrique, l'élément cylindrique intermédiaire (13) étant axialement mobile le long de l'élément cylindrique périphérique externe (11) ;
un premier élément résilient (23) intervenant entre la partie périphérique interne d'une partie d'extrémité axiale de l'élément cylindrique périphérique externe (11) et la partie périphérique externe d'une partie d'extrémité axiale de l'élément cylindrique intermédiaire (13) ;
un second élément résilient (26) intervenant entre la partie périphérique interne de l'autre partie d'extrémité axiale de l'élément cylindrique périphérique externe (11) et la partie périphérique externe de l'autre partie d'extrémité axiale de l'élément cylindrique intermédiaire (13) ; **caractérisé en ce qu'**il comprend en outre
une pluralité d'éléments à billes (29) intervenant entre la première partie de vis (14b) et la seconde partie de vis (13b),
dans lequel les deux parties d'extrémité axiales de l'élément cylindrique périphérique interne (12) sont formées de façon à avoir des parties de projection respectives, se projetant axialement vers l'extérieur depuis les deux parties axialement d'extrémité de l'élément cylindrique périphérique externe (11) et dans lequel l'appareil d'atténuation des vibrations de torsion (10) comprend en outre : un mécanisme d'hystérésis (30, 31, 32, 33) ménagé entre l'élément cylindrique périphérique interne (12) et l'élément cylindrique périphérique externe (11), le mécanisme d'hystérésis (30, 31, 32, 33) comprenant un élément de poussée (31) et un élément de frottement (32, 33), l'élément de poussée (31) étant ménagé entre une des parties de projection de l'élément cylindrique périphérique interne (12) et la partie périphérique externe de l'une des extrémités axiales de l'élément cylindrique périphérique externe (11) pour pousser l'élément cylindrique périphérique externe (11) vers les autres extrémités axiales de l'élément cylindrique périphérique interne (12) et l'élément de frottement (32, 33) étant ménagé entre l'autre des parties de projection de l'élément cylindrique périphérique interne (12) et la partie périphérique externe de l'autre des extrémités axiales de l'élément cylindrique périphérique externe (11), afin de générer une force de frottement.

2. Appareil d'atténuation des vibrations de torsion (10) selon la revendication 1, comprenant en outre une première plaque de poussée (22) et une seconde plaque de poussée (25), la première plaque de poussée (22) intervenant entre l'élément cylindrique intermédiaire (13) et le premier élément résilient (23), afin de former une première chambre d'hébergement avec la partie périphérique externe d'une partie d'extrémité axiale de l'élément cylindrique intermédiaire (13) et la seconde plaque de poussée (25) intervenant entre l'élément cylindrique intermédiaire (13) et le second élément résilient (26), afin de former une second chambre d'hébergement avec la partie périphérique externe de l'autre partie d'extrémité axiale de l'élément cylindrique intermédiaire (13), l'élément cylindrique intermédiaire (13) étant formé avec un alésage passant permettant de maintenir la première chambre d'hébergement et la seconde chambre d'hébergement en communication l'une avec l'autre, la première chambre d'hébergement, la seconde chambre d'hébergement et l'alésage passant étant remplis d'un agent lubrifiant avec les éléments à billes (20, 29).
